# EUROPÄISCHE PATENTSCHRIFT

(11) **EP 2 184 525 B1**
(45) Veröffentlichungstag und Bekanntmachung des Hinweises auf die Patenterteilung: **19.10.2011**
(21) Anmeldenummer: 09174751.9
(22) Anmeldetag: 02.11.2009
(51) Int. Cl.: F16L 19/028, F16L 19/02, B21D 17/02

(54) **Rohrverbindung mit einem Rohr und Verfahren zur Herstellung eines Verbindungsabschnitts einer Rohrverbindung**
Pipe joint with a pipe and method for producing a joining section of a pipe joint
Raccordement de tuyau avec un tuyau et procédé de fabrication d'une section de raccordement d'un raccordement de tuyau

(30) Priorität: 06.11.2008 DE 102008043502
(43) Veröffentlichungstag der Anmeldung: 12.05.2010
(73) Patentinhaber: Eifeler Maschinenbau GmbH, 53881 Euskirchen (DE)
(72) Erfinder: Kloss, Alexander, 50997, Köln (DE); Schorn-Gilson, Alfons, 53913, Swisttal-Odendorf (DE)
(74) Vertreter: Bauer, Dirk

(56) Entgegenhaltungen:
- DE-A1- 3 202 429
- DE-A1- 19 511 063
- DE-A1- 19 941 577
- DE-A1- 19 951 460
- DE-U- 1 960 933
- "DIN EN ISO 8434-1 Metallische Rohrverschraubungen für Fluidtechnik und allgemeine Anwendung - Teil 1: Verschraubungen mit 24 DEG -Konus = Metallic tube connections for fluid power and general use - Part 1: 24 degree cone connectors (EN ISO 8434-1:2007)", DEUTSCHE NORMEN. DIN NORM,, vol. 8434-1, 1 February 2008 (2008-02-01), pages 381-435, XP009147611,

## Beschreibung

### Einleitung

Die Erfindung betrifft eine Rohrverbindung mit einem Rohr gemäß dem Oberbegriff des Patentanspruchs 1. Darüber hinaus betrifft die Erfindung ein Verfahren zur Herstellung eines Verbindungsabschnitts einer Rohrverbindung gemäß dem Oberbegriff des Patentanspruchs 6.

### Stand der Technik

Rohrverbindungen der vorgenannten Art sind allgemein bekannt, wobei der Verbindungsabschnitt und der Noramalabschnitt des Rohres typischerweise zunächst als einzelne Bauteile vorliegen und vor dem Zusammenfügen der Rohrverbindung schweißtechnisch verbunden werden müssen. Bei dem Verbindungsabschnitt des Rohres handelt es sich herkömmlicher Weise um einen Schweißkegel (beziehungsweise Dichtkegel), der durch spanende Bearbeitung aus Vollmaterial hergestellt wird, wobei auf diese Weise sehr große Freiheit bei der Formgestaltung besteht. Insbesondere die Geometrie der Mantelfläche auf der Außenseite des Schweißkegels ist aufgrund der Ausbildung von dem Haltewulst und dem diesem entgegengesetzt geneigten Zentrierwulst mit einer umlaufenden Nut verhältnismäßig aufwändig. Ein solcher Schweißkegel ist Gegenstand der Norm DIN EN ISO 8434-1.

Der unverformte Abschnitt des Rohres ist typischerweise das Rohr selbst, an das der Schweißkegel angeschweißt wird.

An sich haben sich Schweißverbindungen in der Praxis im Hinblick auf ihre Festigkeit und Dauerhalt-barkeit bewährt. Ein gewisser Nachteil dieses Standes der Technik besteht jedoch darin, dass eine Schweißverbindung vergleichsweise aufwendig ist, da das Rohrende vor dem Schweißvorgang sorgfältig vorbereitet werden muss. Darüber hinaus lässt sich eine Schweißverbindung lediglich von speziell ausgebildetem Fachpersonal herstellen, was die Herstellkosten vergrößert.

### Aufgabe

Es ist Aufgabe der vorliegenden Erfindung, eine Rohrverbindung sowie ein Verfahren zu dessen Herstellung gemäß der bekannten Art so weiterzuentwickeln, dass diese möglichst flexibel einsetzbar ist, wobei auf eine Schweißverbindung zwischen Verbindungsabschnitt und unverformtem Abschnitt verzichtet werden soll.

### Lösung

Ausgehend von der vorbeschriebenen Rohrverbindung wird diese Aufgabe dadurch gelöst, dass der Verbindungsabschnitt des Rohres integral mit dem unverformten Abschnitt des Rohres verbunden und durch einen Umformvorgang, insbesondere mindestens einen in axiale Richtung des Rohres bewirkten Stauchvorgang, hergestellt ist.

Auf diese Weise sind Verbindungsabschnitt und unverformter Abschnitt des Rohres als ein Bauteil hergestellt, so dass ein Schweißvorgang zu deren Verbindung entfällt und der Montageprozess der Rohrverbindung insgesamt betrachtet deutlich vereinfacht ist. Außerdem treten keine Gefügeänderungen infolge hoher thermischer Belastung in der Nähe der Schweißnaht auf. Auch eine Dichtheitskontrolle kann entfallen.

Ein weiterer Vorteil der erfindungsgemäßen Rohrverbindung gegenüber den aus dem Stand der Technik bekannten Rohrverbindungen besteht darin, dass der Umformvorgang der Rohres keinen Materialverlust mit sich bringt. Im Gegensatz hierzu fällt bei der spanenden Bearbeitung von Vollmaterial zur Herstellung eines Schweißkegels viel Abfallmaterial in Form von Spänen an, der nicht zuletzt einen hohen Herstellungspreis des Schweißkegels bewirkt.

Im Unterschied zu einem spanend hergestellten Schweißkegel, der über seine Länge variierende Wandstärken aufweisen kann, ist die Wandstärke des erfindungsgemäßen Rohres auch im umgeformten Bereich von der Wandstärke des Rohres im unverformtern Abschnitt abhängig und nur in geringen Maßen variierbar.

Die umlaufende Nut weist einen parallelogrammförmigen Querschnitt auf und zwei parallel zueinander und rechtwinklig zu der Längsachse des Rohres verlaufende Wandungen, und besitzt parallel zu dem 24°-Zentrierkegel verlaufenden Nutgrund, da ein darin untergebrachter O-Ring besonders sicher gehalten wird. Wenn sich der 24°- Zentrierkegel bis zur Stirnfläche des Rohres erstreckt, kann ein besonders kurzer Verbindungsabschnitt hergestellt werden.

Aufgrund der umformtechnischen Herstellung der erfindungsgemäßen Rohrverbindung wird es je nach Ausführungsform typischerweise dazu kommen, dass die innere Mantelfläche des Rohres in dem Verbindungsabschnitt mit einer sich radial nach außen erstreckenden umlaufenden Vertiefung versehen ist. Dies bedeutet, dass beispielsweise die Umformung des Rohres zu einem Haltewulst, also eine zu dem Außenbereich des Rohres hin gerichtete Wölbung, gleichzeitig eine Art "Rinne" oder Vertiefung in dem Innenmantel des Rohres bewirkt.

Vorteilhafterweise befindet sich zwischen dem 45°-Haltekegel und dem 24°-Zentrierkegel eine Anschlagschulter mit einer dem 24°-Zentrierkegel zugewandten radial ausgerichteten Anschlagfläche, an die sich in Richtung auf den 45°-Haltekegel ein Abschnitt der äußeren Mantelfläche des Verbindungsbereichs mit einer zylindrischen Mantelfläche anschließt. Die Anschlagschulter ist insbesondere für die Montage der Rohrverbindung von Vorteil: Bei der Montage der Rohrverbindung, bei der die Überwurfmutter mit dem Verschraubungskörper verschraubt wird, wird das Rohr in Richtung des Verschraubungskörpers bewegt, bis die Anschlagschulter an die radiale Stirnfläche des Verschraubungskörpers anschlägt. Hierdurch wird ein starker Drehmomentanstieg bewirkt, der als spürbarer Hinweis für einen Monteur dient, dass die Komponenten der Rohrverbindung nunmehr passgenau zusammengefügt sind und sich die Rohrverbindung im Betriebszustand befindet (Montageende). Beschädigungen durch ein zu starkes Anziehen werden so sicher vermieden.

Vorteilhafterweise ist der Umformvorgang für die Herstellung des Verbindungsabschnitts ein Mehrschritt-Stauchvorgang unter Verwendung einer Mehrzahl von Werkzeugen, wodurch eine aufwändig gestaltete Kontur des Verbindungsabschnitts mit Vorsprüngen oder Aussparungen erzielbar ist.

Verfahrenstechnisch wird die eingangs genannte Aufgabe ausgehend von einem Verfahren nach dem Oberbegriff des Anspruchs 6 dadurch gelöst, dass der Verbindungsabschnitt durch einen Umformvorgang aus einem vormaligen Endabschnitt des unverformten Abschnitts hergestellt wird. Hierdurch ergeben sich die bezüglich des erfindungsgemäßen Rohrverbindung beschriebenen Vorteile.

Die umlaufende Nut wird mit einem parallelogrammförmigen Querschnitt hergestellt und weist zwei parallel zueinander und rechtwinklig zu der Längsachse des Rohres verlaufende Wandungen, sowie einen parallel zu dem 24°-Zentrierkegel verlaufenden Nutgrund auf. Bevorzugt wird der 24°-Zentrierkegel bis zur Stirnfläche des Rohres ausgebildet.

Wird der Verbindungsabschnitt durch einen Stauchvorgang unter Verwendung einer Presse und zugehöriger Formwerkzeuge hergestellt, so entstehen qualitativ hochwertige Verbindungsabschnitte, die leicht und zuverlässig reproduzierbar sind.

Schließlich ist es vorteilhaft, wenn der Verbindungsabschnitt im Wege eines mehrstufigen Stauchvorgangs, insbesondere eines Stauchvorgangs mit mindestens fünf aufeinanderfolgenden Stufen, hergestellt wird, wobei in jeder Stufe eine zunehmende Annährung an die Endkontur des Verbindungsabschnitts erzielt wird. Wie bereits zuvor erwähnt, können auf diese Weise aufwändig geformte und stark konturierte Verbindungsabschnitte hergestellt werden.

### Ausführungsbeispiel

Die Erfindung wird nachfolgend anhand zweier Ausführungsbeispiele einer erfindungsgemäßen Rohrverbindung erläutert.

Es zeigt:
- Figur 1: eine aufgereihte Darstellung eines Verschraubungskörpers, eines Roh- res mit Verbindungsabschnitt sowie einer Überwurfmutter, jeweils im Halbschnitt,
- Figur 2: eine Rohrverbindung aus den Komponenten gemäß Figur 1 im montier- ten Zustand (Betriebszustand) im Halbschnitt,
- Figur 3: eine Darstellung des Rohres gemäß Figur 1 im Halbschnitt,
- Figur 4: eine Rohrverbindung gemäß Figur 1 mit alternativ ausgebildetem Ver- bindungsabschnitt,
- Figur 5: eine Rohrverbindung aus den Komponenten gemäß Figur 4 im handfest vormontierten Zustand (gefügter Zustand) im Halbschnitt und
- Figur 6: eine Darstellung des alternativen Rohres aus Figur 4 im Halbschnitt.

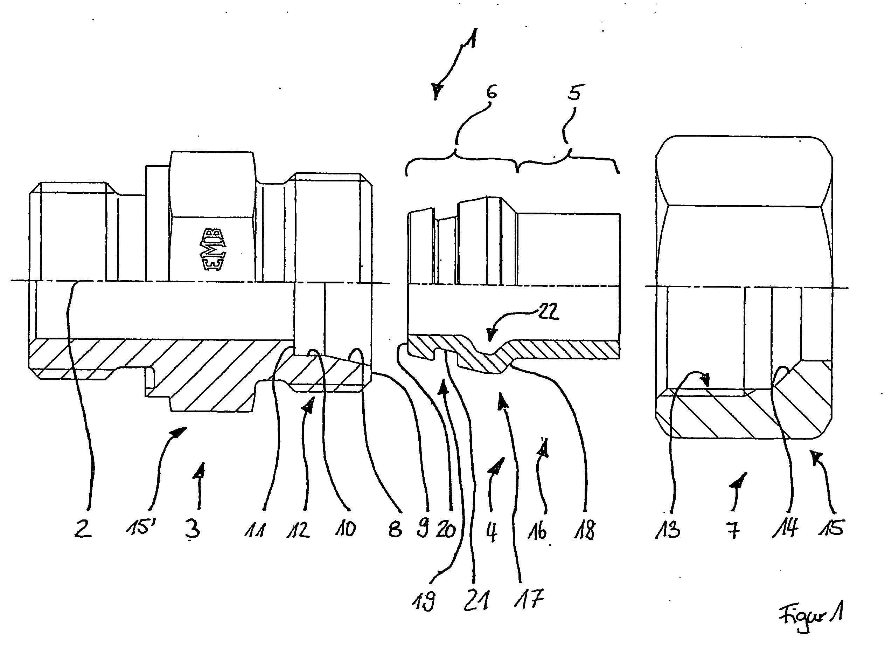

Figur 1 zeigt die Komponenten einer erfindungsgemäßen Rohrverbindung 1, die der Anschaulichkeit halber nebeneinander aufgereiht dargestellt sind. Ausgehend von der Mittelachse 2 der Komponenten sind die unteren Hälften der Komponenten jeweils geschnitten dargestellt, während die oberen Hälften jeweils als Ansicht der Komponenten abgebildet sind.

Die Rohrverbindung 1 besteht aus einem Verschraubungskörper 3, einem Rohr 4 umfassend einen unverformten Abschnitt 5 und einen Verbindungsabschnitt 6 und einer Überwurfmutter 7. Auf der dem Rohr 4 zugewandten Seite besitzt der Verschraubungskörper 3 einen 24°-Aufnahmekonus 8, der auf der dem Rohr 4 zugewandten Seite in eine radial verlaufende Stirnfläche 9 übergeht. Zu der dem Rohr 4 abgewandten Seite hin geht der 24°-Aufnahmekonus 8 in einen achsparallelen Abschnitt 10 über, der wiederum in einem radial verlaufenden Rohrsitzboden 11 endet. Auf seiner äußeren Mantelfläche ist der Verschraubungskörper 3 mit einem Gewindeabschnitt 12 versehen, der zur Verschraubung des Verschraubungskörpers 3 mit der Überwurfmutter 7 dient. Die Überwurfmutter 7 weist demnach einen Gewindeabschnitt 13 an ihrer inneren Mantelfläche auf. Ferner ist die Überwurfmutter 7 auf ihrer dem Rohr 4 abgewandten Seite mit einem 45°-Spannkonus 14 ausgestattet. Sowohl der Verschraubungskörper 3 als auch die Überwurfmutter 7 sind jeweils mit einem Sechskant 15, 15' für den Ansatz eines Schraubschlüssels versehen.

Von dem Rohr 4 der erfindungsgemäßen Rohrverbindung 1 ist lediglich ein Endabschnitt 16 gezeigt, der sich aus dem Verbindungsabschnitt 6 und einem den unverformten Abschnitt 5 bildenden Bereich des Rohres 4 in seinem Ursprungszustand zusammensetzt. Im Verbindungsabschnitt 6 weist das Rohr 4 einen umformtechnisch hergestellten Haltewulst 17 auf, der sich über den Außendurchmesser des Rohres 4 in dem unverformten Abschnitt 6 radial nach außen erstreckt. Auf der der Überwurfmutter 7 zugewandten Seite ist der Haltewulst 17 als 45°-Haltekegel 18 ausgebildet, mit dem das Rohr 4 im montierten Zustand der Rohrverbindung 1 mit dem 45°-Spannkonus 14 der Überwurfmutter 7 zusammenwirkt.

Auf der dem Verschraubungskörper 3 zugewandten Seite des Haltewulstes 17 ist dieser als 24°-Zentrierkegel 19 ausgebildet, wobei dieser gegenüber dem 45°-Haltekegel 18 entgegengesetzt geneigt ist. Der 24°-Zentrierkegel 19 endet auf der dem Verschraubungskörper 3 zugewandten Seite in einer radial verlaufenden Stirnfläche 20. Im Bereich des 24°-Zentrierkegels 19 befindet sich eine umlaufende Nut 21, die zur Aufnahme eines elastomeren Dichtrings dient, der in den Figuren nicht dargestellt ist.

Der Verbindungsabschnitt 6 des Rohres 4 ist durch einen mehrstufigen Umformvorgang des vormaligen Endabschnitts 16 des Rohres 4 in seinem Ursprungszustand hergestellt worden, so dass der Verbindungsabschnitt 6 integral mit dem unverformten Abschnitt 5 des Rohres 4 verbunden ist. Das Rohr 4 und der Verbindungsabschnitt 6 sind demnach einteilig ausgebildet.

Die Wandstärke des Rohres 4 im unverformten Abschnitt 5 und im Verbindungsabschnitt 6 variiert nur um ein vergleichsweise geringes Maß, was auf die Herstellung des Verbindungsabschnitts 6 durch Umformung zurückzuführen ist. Vergrößert sich der Außendurchmesser des Rohres 4, wie es beispielsweise im Bereich des Haltewulstes 17 der Fall ist, so vergrößert sich analog hierzu ebenfalls der Innendurchmesser des Rohres 4. Mit der Ausbildung eines Wulstes auf der äußeren Mantelfläche des Rohres 4 geht eine Vertiefung 22 oder ein Loch auf der inneren Mantelfläche einher.

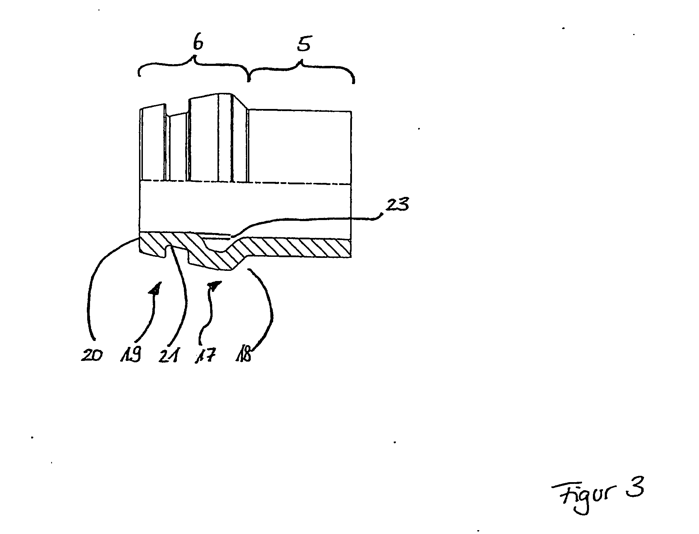

Das in der Figur 1 dargestellte Rohr 4 weist im Bereich des unverformten Abschnitts 5 einen größeren Innendurchmesser auf als im Bereich des Verbindungsabschnitts 6, so dass hier eine Art Versprung 23 entsteht, der in der Figur 3 deutlich wird.

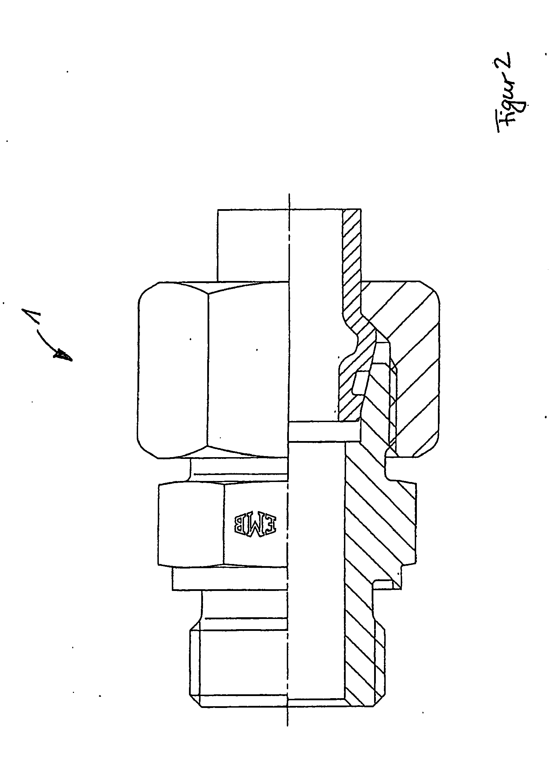

In der Figur 2 sind die Bestandteile der Rohrverbindung 1 im montierten Zustand (Betriebszustand) gezeigt. Es wird bereits deutlich, dass der 45°-Haltekegel 18 des Haltewulstes 17 mit dem 45°-Spannkonus 14 der Überwurfmutter 7 zusammenwirkt. Ferner stützt sich der 24°-Zentrierkegel 19 an dem 24°-Aufnahmekonus 8 des Verschraubungskörpers 3 ab.

Die Figur 3 zeigt nochmals das Rohr 4 der erfindungsgemäßen Rohrverschraubung 1.

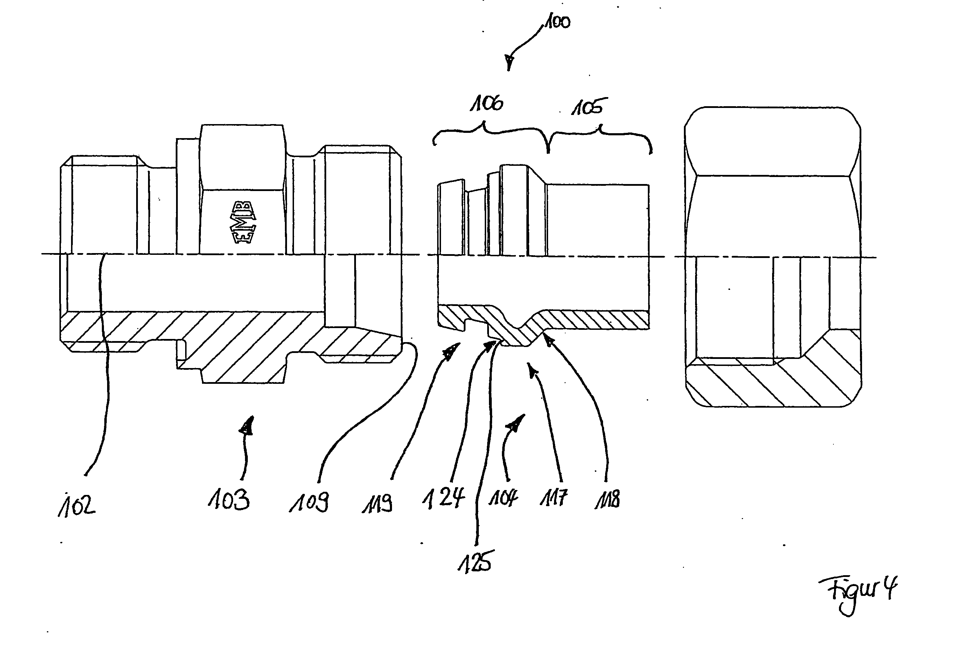

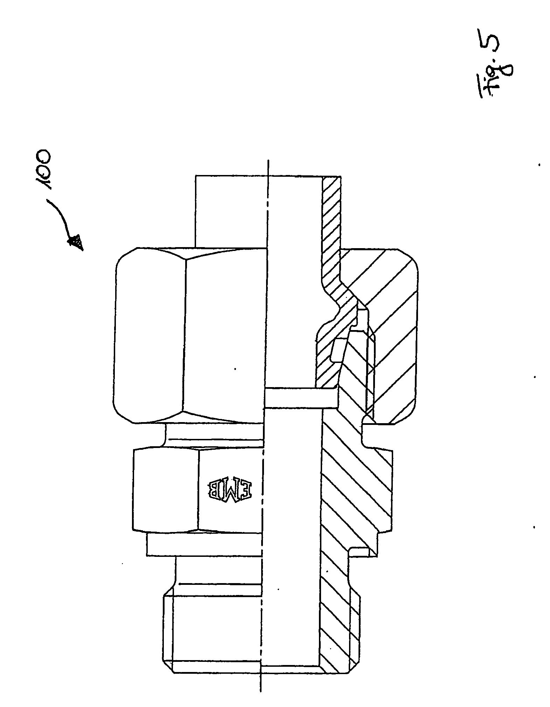

Die Rohrverschraubung 100 gemäß den Figuren 4 und 5 entspricht im Großen und Ganzen der Rohrverschraubung 1 aus Figur 1. Der einzige Unterschied besteht darin, dass das Rohr 104 im Verbindungsabschnitt 106 ferner mit einer Anschlagschulter 124 ausgestattet ist, die als Montagehilfe beim Anziehen der Rohrverschraubung 100 dienen soll. Das Montageende wird dem Monteur durch einen deutlichen Drehmomentanstieg signalisiert. Die Anschlagschulter 124 befindet sich auf der dem Verschraubungskörper 103 zugewandten Seite des Haltewulstes 117 und besteht aus einer radial verlaufenden Anschlagfläche 125 des Rohres 104. Zwischen dem 45°-Haltekegel 118 und der Anschlagschulter 124 besitzt die äußere Mantelfläche des Verbindungsabschnitts 106 einen zylindrischen Abschnitt 126.

In der Figur 5 befinden sich die Bestandteile noch nicht im Betriebszustand und die Anschlagschulter 124 liegt noch nicht an der radialen Stirnfläche 109 des Verschraubungskörpers 103 an. Erst im Betriebszustand stützt sich der Verbindungsabschnitt 106 mit seiner Anschlagschulter 124 an der Stirnfläche 109 des Verschraubungskörpers 103 ab.

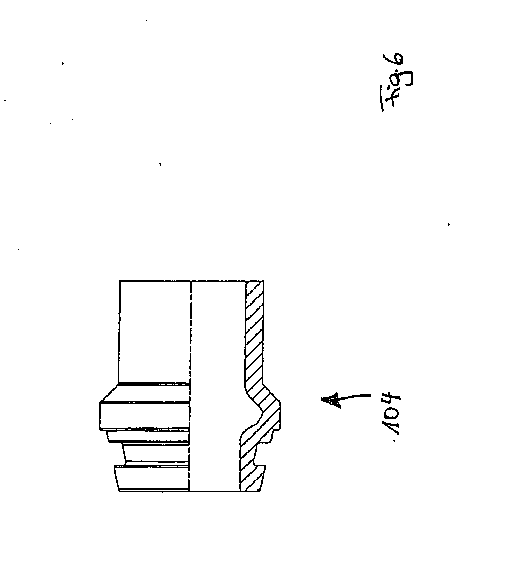

In der Figur 6 ist das alternativ ausgebildete Rohr 104 aus Figur 4 nochmals separat gezeigt.

### In den Figuren sind

- 1: Rohrverbindung
- 2: Mittelachse
- 3: Verschraubungskörper
- 4: Rohr
- 5: unverformter Abschnitt
- 6: Verbindungsabschnitt
- 7: Überwurfmutter
- 8: 24°-Aufnahmekonus
- 9: Stirnfläche
- 10: achsparallelen Abschnitt
- 11: Rohrsitzboden
- 12: Gewindeabschnitt
- 13: Gewindeabschnitt
- 14: 45°-Spannkonus
- 15, 15': Sechskant
- 16: Endabschnitt
- 17: Haltewulst
- 18: 45°-Haltekegel
- 19: 24°-Zentrierkegel
- 20: Stirnfläche
- 21: Umlaufende Nut
- 22: Vertiefung
- 23: Versprung
- 100: Rohrverbindung
- 102: Mittelachse
- 103: Verschraubungskörper
- 104: Rohr
- 105: unverformter Abschnitt
- 106: Verbindungsabschnitt
- 109: radiale Stirnfläche
- 117: Haltewulst
- 118: 45°-Haltekegel
- 119: 24°-Zentrierkegel
- 124: Anschlagschulter
- 125: Anschlagfläche
- 126: Zylindrischer Abschnitt

## Patentansprüche

1. Rohrverbindung (1, 100) mit einem Rohr (4, 104), einem Verschraubungskörper (3, 103) und einer Überwurfmutter (7), wobei der Verschraubungskörper (3, 103) ausgehend von einer radialen Stirnfläche (9) eine Bohrung mit einem 24°-Aufnahmekonus (8) und einen sich daran anschließenden achsparallelen Abschnitt (10) aufweist, der in einen radial verlaufenden Rohrsitzboden (11) übergeht, und an seiner äußeren Mantelfläche mit einem Gewindeabschnitt (12) versehen ist, der mit einem Gewindeabschnitt (13) an einer inneren Mantelfläche einer Durchgangsbohrung der Überwurfmutter (7) zusammenwirkt, die mit einem 45°-Spannkonus (14) versehen ist, der mit einem 45°-Haltekegel (18, 118) an der äußeren Mantelfläche des Rohres (4, 104) zusammenwirkt, wobei das Rohr (4, 104) einen Verbindungsabschnitt (6, 106), der sich im montierten Zustand der Rohrverbindung (1, 100) sowohl in der Bohrung des Verschraubungskörpers (3, 103) als auch in der Durchgangsbohrung der Überwurfmutter (7) befindet, sowie einen unverformten Abschnitt (5, 105) aufweist, in dem das Rohr (4, 104) sich in seinem Ursprungszustand befindet, wobei der Verbindungsabschnitt (6, 106) einen sich über den Außendurchmesser des Rohres (4, 104) im unverformten Abschnitt (5, 105) radial nach außen erstreckenden Haltewulst (17, 117) mit dem 45°-Haltekegel (18, 118) und einen entgegengesetzt geneigten, gleichfalls an dem Haltewulst (17, 117) angeordneten 24°-Zentrierkegel (19) aufweist, der im montierten Zustand der Rohrverbindung (1, 100) mit dem 24°-Aufnahmekonus (8) des Verschraubungskörpers (3, 103) zusammenwirkt, wobei in dem 24°-Zentrierkegel (19) eine umlaufende Nut (21) zur Aufnahme eines elastomeren Dichtrings vorhanden ist, die einen parallelogrammförmigen Querschnitt aufweist und zwei parallel zueinander und rechtwinklig zu der Längsachse des Rohres (4, 104) verlaufende Wandungen, sowie einen parallel zu dem 24°-Zentrierkegel (19) verlaufenden Nutgrund besitzt, **dadurch gekennzeichnet, dass** der Verbindungsabschnitt (6, 106) des Rohres (4, 104) integral mit dem unverformten Abschnitt (5, 105) des Rohres (4, 104) verbunden und durch einen Umformvorgang, insbesondere einen in axiale Richtung des Rohres (4, 104) bewirkten Stauchvorgang, hergestellt ist.

2. Rohrverbindung nach dem vorgenannten Anspruch, **dadurch gekennzeichnet, dass** sich der 24°- Zentrierkegel (19) bis zur Stirnfläche (20) des Rohres (4, 104) erstreckt.

3. Rohrverbindung nach einem der vorgenannten Ansprüche, **dadurch gekennzeichnet, dass** die innere Mantelfläche des Rohres (4, 104) in dem Verbindungsabschnitt (6, 106) mit einer sich radial nach außen erstreckenden umlaufenden Vertiefung (22) versehen ist.

4. Rohrverbindung (100) nach einem der vorgenannten Ansprüche, **dadurch gekennzeichnet, dass** sich zwischen dem 45°-Haltekegel (118) und dem 24°-Zentrierkegel (119) eine Anschlagschulter (124) mit einer dem 24°-Zentrierkegel (119) zugewandten radial ausgerichteten Anschlagfläche (125) befindet, an die sich in Richtung auf den 45°-Haltekegel (118) ein Abschnitt der äußeren Mantelfläche des Verbindungsbereichs (106) mit einer zylindrischen Mantelfläche (126) anschließt.

5. Rohrverbindung nach einem der vorgenannten Ansprüche, **dadurch gekennzeichnet, dass** der Umformvorgang ein Mehrschritt-Stauchvorgang unter Verwendung einer Mehrzahl von Werkzeugen ist.

6. Verfahren zur Herstellung eines Verbindungsabschnitts (6, 106) einer Rohrverbindung (1, 100) bestehend aus einem Rohr (4, 104), einem Verschraubungskörper (3, 103) und einer Überwurfmutter (7), wobei der Verschraubungskörper (3, 103) ausgehend von einer radialen Stirnfläche (9) eine Bohrung mit einem 24°-Aufnahmekonus (8) und einem sich daran anschließenden achsparallelen Abschnitt (10) aufweist, der in einen radial verlaufenden Rohrsitzboden (11) übergeht, und an seiner äußeren Mantelfläche mit einem Gewindeabschnitt (12) versehen ist, der mit einem Gewindeabschnitt (13) an einer inneren Mantelfläche einer Durchgangsbohrung der Überwurfmutter (7) zusammenwirkt, die mit einem 45°-Spannkonus (14) versehen ist, der mit einem 45°-Haltekegel (18) an der äußeren Mantelfläche des Rohres (4, 104) zusammenwirkt, wobei das Rohr (4, 104) einen Verbindungsabschnitt (6, 106), der sich im montierten Zustand der Rohrverbindung (1, 100) sowohl in der Bohrung des Verschraubungskörpers (3, 103) als auch in der Bohrung der Überwurfmutter (7) befindet, sowie einen unverformten Abschnitt (5, 105) aufweist, in dem das Rohr (4, 104) sich in seinem Ursprungszustand befindet, wobei der Verbindungsabschnitt (6, 106) einen sich über den Außendurchmesser des Rohres (4, 104) im unverformten Abschnitt (5, 105) radial nach außen erstreckenden Haltewulst (17, 117) mit dem 45°-Haltekegel (18, 118) und einen entgegengesetzt geneigten, gleichfalls an dem Haltewulst (17, 117) angeordneten 24°-Zentrierkegel (19, 119) aufweist, der im montierten Zustand der Rohrverbindung (1, 100) mit dem 24°-Aufnahmekonus (8) des Verschraubungskörpers (3, 103) zusammenwirkt, wobei in dem 24°-Zentrierkegel (19, 119) eine umlaufende Nut (21) zur Aufnahme eines elastomeren Dichtrings vorhanden ist, die mit einem parallelogrammförmigen Querschnitt hergestellt wird und zwei parallel zueinander und rechtwinklig zu der Längsachse des Rohres (4, 104) verlaufende Wandungen, sowie einen parallel zu dem 24°-Zentrierkegel (19) verlaufenden Nutgrund aufweist, **dadurch gekennzeichnet, dass** der Verbindungsabschnitt (6, 106) durch einen Umformvorgang aus einem vormaligen Endabschnitt (16) des unverformten Abschnitts (5, 105) hergestellt wird.

7. Verfahren nach Anspruch 6, **dadurch gekennzeichnet, dass** der 24°- Zentrierkegel (19) bis zur Stirnfläche (20) des Rohres (4, 104) ausgebildet wird.

8. Verfahren nach einem der Ansprüche 6 und 7, **dadurch gekennzeichnet, dass** der Verbindungsabschnitt (6, 106) durch einen Stauchvorgang unter Verwendung einer Presse und zugehöriger Formwerkzeuge hergestellt wird.

9. Verfahren nach einem der Ansprüche 6 bis 8, **dadurch gekennzeichnet, dass** der Verbindungsabschnitt (6, 106) im Wege eines mehrstufigen Stauchvorgangs, insbesondere eines Stauchvorgangs mit mindestens fünf aufeinanderfolgenden Stufen, hergestellt wird, wobei in jeder Stufe eine zunehmende Annährung an die Endkontur des Verbindungsabschnitts (6, 106) erzielt wird.

## Claims

1. A pipe connection (1, 100), having a pipe (4, 104), a screw-fastening body (3, 103) and a union nut (7), wherein the screw-fastening body (3, 103), starting from a radial end face (9) has a bore with a 24° receiving cone (8) and an adjacent axis-parallel section (10), which merges into a radially extending pipe seat bottom (11), and is provided on the outer lateral surface thereof with a threaded section (12) which interacts with a threaded section (13) on an inner lateral surface of a through bore of the union nut (7), which is provided with a 45° clamping cone (14), which interacts with a 45° retaining cone (18, 118) on the outer lateral surface of the pipe (4, 104), wherein the pipe (4, 104) has a connecting section (6, 106) which is situated both in the bore of the screw-fastening body (3, 103) and in the through bore of the union nut (7) when the pipe connection (1, 100) is in the installed state, and a non-deformed section (5, 105) in which the pipe (4, 104) is in the original state thereof, wherein the connecting section (6, 106) has a retaining bead (17, 117), which extends radially outwards beyond the outer diameter of the pipe (4, 104) in the non-deformed section (5, 105), with the 45° retaining cone (18, 118) and a 24° centring cone (19), which is inclined in the opposite direction and is likewise arranged on the retaining bead (17, 117), which centring cone interacts with the 24° receiving cone (8) of the screw-fastening body (3, 103) when the pipe connection (1, 100) is in the installed state, wherein a circumferential groove (21) is present in the 24° centring cone (19) for receiving an elastomeric sealing ring, which groove has a parallelogram-shaped cross section and two walls which extend parallel to each other and at right angles to the longitudinal axis of the pipe (4, 104) and a groove bottom which extends parallel to the 24° centring cone (19), **characterised in that** the connecting section (6, 106) of the pipe (4, 104) is connected integrally with the non-deformed section (5, 105) of the pipe (4, 104) and is produced by a reforming process, in particular by a compression process effected in the axial direction of the pipe (4, 104).

2. The pipe connection according to the preceding claim, **characterised in that** the 24° centring cone (19) extends as far as the end face (20) of the pipe (4, 104).

3. The pipe connection according to one of the preceding claims, **characterised in that** the inner lateral surface of the pipe (4, 104) is provided in the connecting section (6, 106) with a circumferential depression (22) which extends radially outwards.

4. The pipe connection (100) according to one of the preceding claims, **characterised in that** a stop shoulder (124) with a radially aligned stop face (125) facing the 24° centring cone (119) is situated between the 45° retaining cone (118) and the 24° centring cone (119), which a section of the outer lateral surface of the connecting region (106) with a cylindrical lateral surface (126) adjoins in the direction of the 45° retaining cone (118).

5. The pipe connection according to one of the preceding claims, **characterised in that** the reforming process is a multi-step compression process using a plurality of tools.

6. A method for producing a connecting section (6, 106) of a pipe connection (1, 100) consisting of a pipe (4, 104), a screw-fastening body (3, 103) and a union nut (7), wherein the screw-fastening body (3, 103), starting from a radial end face (9) has a bore with a 24° receiving cone (8) and an adjacent axis-parallel section (10), which merges into a radially extending pipe seat bottom (11), and is provided on the outer lateral surface thereof with a threaded section (12) which interacts with a threaded section (13) on an inner lateral surface of a through bore of the union nut (7), which is provided with a 45° clamping cone (14), which interacts with a 45° retaining cone (18) on the outer lateral surface of the pipe (4, 104), wherein the pipe (4, 104) has a connecting section (6, 106) which is situated both in the bore of the screw-fastening body (3, 103) and in the bore of the union nut (7) when the pipe connection (1, 100) is in the installed state, and a non-deformed section (5, 105) in which the pipe (4, 104) is in the original state thereof, wherein the connecting section (6, 106) has a retaining bead (17, 117), which extends radially outwards beyond the outer diameter of the pipe (4, 104) in the non-deformed section (5, 105), with the 45° retaining cone (18, 118) and a 24° centring cone (19, 119), which is inclined in the opposite direction and is likewise arranged on the retaining bead (17, 117), which centring cone interacts with the 24° receiving cone (8) of the screw-fastening body (3, 103) when the pipe connection (1, 100) is in the installed state, wherein a circumferential groove (21) is present in the 24° centring cone (19, 119) for receiving an elastomeric sealing ring, which groove is produced with a parallelogram-shaped cross section and two walls which extend parallel to each other and at right angles to the longitudinal axis of the pipe (4, 104) and a groove bottom which extends parallel to the 24° centring cone (19), **characterised in that** the connecting section (6, 106) is produced by a reforming process, in particular by a compression process from a former end section (16) of the non-deformed section (5, 105).

7. The method according to Claim 6, **characterised in that** the 24° centring cone (19) is formed as far as the end face (20) of the pipe (4, 104).

8. The method according to one of Claims 6 and 7, **characterised in that** the connecting section (6, 106) is produced by a compression process using a press and associated dies.

9. The method according to one of Claims 6 to 8, **characterised in that** the connecting section (6, 106) is produced in the course of a multi-step compression process, in particular a compression process with at least five consecutive steps, wherein an increasing approximation to the end contour of the connecting section (6, 106) is achieved with each step.

## Revendications

1. Raccord de conduite (1, 100) avec une conduite (4, 104), un corps de vissage (3, 103) et un écrou d'accouplement (7), dans lequel le corps de vissage (3, 103) comporte un perçage partant d'une surface frontale radiale (9), avec un cône d'admission de 24 ° (8), ainsi qu'une section (10) parallèle à l'axe, consécutive à celui-ci, qui est suivi par un fond d'assise de conduite (11) étendu radialement, et pourvu d'une section filetée (12) sur sa surface extérieure, qui coopère avec une section filetée (13) sur une surface intérieure d'un perçage traversant de l'écrou d'accouplement (7), avec un cône de serrage de 45° (14) coopérant avec un cône de maintien de 45° (18, 118) sur la surface extérieure de la conduite (4, 104), dans lequel la conduite (4, 104) comporte une section de raccordement (6, 106) qui à l'état monté du raccord de conduite (1, 100) se situe aussi bien dans le perçage du corps de vissage (3, 103) que dans le perçage traversant de l'écrou d'accouplement (7), ainsi qu'une section non déformée (5, 105), dans laquelle la conduite (4, 104) se trouve dans son état initial, dans lequel la section de raccordement (6, 106) comporte un bourrelet de maintien (17, 117) s'étendant radialement vers l'extérieur sur le diamètre extérieur de la conduite (4, 104) dans la section non déformée (5, 105), avec le cône de maintien de 45° (18, 118), ainsi qu'un cône de centrage de 24° (19) également disposé sur le bourrelet de maintien (17, 117) et incliné dans le sens contraire, qui à l'état monté du raccord de conduite (1, 100) coopère avec le cône d'admission de 24° (8) du corps de vissage (3, 103), où, dans le cône de centrage de 24° (19), se trouve une rainure périphérique (21) pour l'admission d'une bague d'étanchéité élastomère présentant une section transversale en forme de parallélogramme et possédant deux parois s'étendant parallèlement entre elles et en angle droit par rapport à l'axe longitudinal de la conduite (4, 104), ainsi qu'un fond de rainure s'étendant parallèlement au cône de centrage de 24° (19), **caractérisé en ce que** la section de raccordement (6, 106) de la conduite (4, 104) est reliée intégralement avec la section non déformée (5, 105) de la conduite (4, 104), et fabriquée par une opération de déformation, en particulier une opération de tassement exercée dans le sens axial de la conduite (4, 104).

2. Raccord de conduite selon la revendication précédente, **caractérisé en ce que** le cône de centrage de 24° (19) s'étend jusqu'à la surface frontale (20) de la conduite (4, 104).

3. Raccord de conduite selon l'une des revendications précédentes, **caractérisé en ce que** dans la section de raccordement (6, 106), la surface intérieure de la conduite (4, 104) est pourvue d'un renfoncement périphérique (22) s'étendant radialement vers l'extérieur.

4. Raccord de conduite (100) selon l'une des revendications précédentes, **caractérisé en ce qu'**entre le cône de maintien de 45° (118) et le cône de centrage de 24° (119) se trouve une épaule d'appui (124) avec une surface de butée (125) orientée radialement et tournée vers le cône de centrage de 24° (119), suivie d'une section de la surface extérieure de la zone de raccordement (106) avec une surface cylindrique (126), en direction du cône de maintien de 45° (118).

5. Raccord de conduite selon l'une des revendications précédentes, **caractérisé en ce que** l'opération de déformation est une opération de tassement à plusieurs étapes, réalisée à l'aide d'une pluralité d'outils.

6. Procédé pour la fabrication d'une section de raccordement (6, 106) d'un raccord de conduite (1, 100), constituée d'une conduite (4, 104), d'un corps de vissage (3, 103) et d'un écrou d'accouplement (7), dans lequel le corps de vissage (3, 103) comporte un perçage partant d'une surface frontale radiale (9), avec un cône d'admission de 24° (8), ainsi qu'une section consécutive (10) parallèle à l'axe, suivie d'un fond d'assise de conduite (11) s'étendant radialement et pourvue d'une section filetée (12) sur sa surface extérieure, qui coopère avec une section filetée (13) sur une surface intérieure d'un perçage traversant de l'écrou d'accouplement (7) pourvu d'un cône de serrage de 45° (14) coopérant avec un cône de maintien de 45° (18) sur la surface extérieure de la conduite (4, 104), dans lequel la conduite (4, 104) comporte une section de raccordement (6, 106) qui à l'état monté du raccord de conduite (1, 100) se situe aussi bien dans le perçage du corps de vissage (3, 103) que dans le perçage traversant de l'écrou d'accouplement (7), ainsi qu'une section non déformée (5, 105), dans laquelle la conduite (4, 104) se trouve dans son état initial, dans lequel la section de raccordement (6, 106) comporte un bourrelet de maintien (17, 117) s'étendant radialement vers l'extérieur sur le diamètre extérieur de la conduite (4, 104) dans la section non déformée (5, 105), avec le cône de maintien de 45° (18, 118), ainsi qu'un cône de centrage de 24° (19, 119) également disposé sur le bourrelet de maintien (17, 117) et incliné dans le sens contraire, qui à l'état monté du raccord de conduite (1, 100) coopère avec le cône d'admission de 24 ° (8) du corps de vissage (3, 103), où, dans le cône de centrage de 24° (19, 119), se trouve une rainure périphérique (21) pour l'admission d'une bague d'étanchéité élastomère conçue avec une section transversale en forme de parallélogramme, qui possède deux parois s'étendant parallèlement entre elles et en angle droit par rapport à l'axe longitudinal de la conduite (4, 104), ainsi qu'un fond de rainure s'étendant parallèlement au cône de centrage de 24° (19), **caractérisé en ce que** la section de raccordement (6, 106) de la conduite (4, 104) est fabriquée par une opération de déformation, à partir d'une ancienne section terminale (16) de la section non déformée (5, 105).

7. Procédé selon la revendication 6, **caractérisé en ce que** le cône de centrage de 24° (19) est formé jusqu'à la surface frontale (20) de la conduite (4, 104).

8. Procédé selon l'une des revendications 6 et 7, **caractérisé en ce que** la section de raccordement (6, 106) est réalisée par une opération de tassement, à l'aide d'une presse et de moules correspondants.

9. Procédé selon l'une des revendications 6 à 8, **caractérisé en ce que** la section de raccordement (6, 106) est fabriquée au cours d'une opération de tassement à plusieurs étapes, en particulier une opération de tassement avec au moins cinq étapes consécutives, où chaque étape permet de se rapprocher davantage du contour final de la section de raccordement (6, 106).
